# FASCICULE DE BREVET EUROPEEN

(11) **EP 2 976 891 B1**
(45) Date de publication et mention de la délivrance du brevet: **08.05.2019**
(21) Numéro de dépôt: 14717203.5
(22) Date de dépôt: 19.03.2014
(51) Int. Cl.: H04Q 9/00, H04W 48/14

(54) **RÉSEAU INTELLIGENT POUR LA COMMUNICATION PAR RADIO DE DONNÉES**
INTELLIGENTES NETZ ZUR ÜBERMITTLUNG VON DATEN PER FUNK
INTELLIGENT NETWORK FOR COMMUNICATING DATA BY RADIO

(30) Priorité: 20.03.2013 FR 1352496
(43) Date de publication de la demande: 27.01.2016
(73) Titulaire: SUEZ Groupe, 92040 Paris la Défense Cedex (FR)
(72) Inventeur: HERBRON, Jean René, F-78420 Carrieres sur Seine (FR); MILLE, Michael, F-28410 Bû (FR); LACOSTE, Robert, F-92370 Chaville (FR)
(74) Mandataire: IPAZ
(86) Numéro de dépôt international: PCT/IB2014/059967
(87) Numéro de publication internationale: WO 2014/147569

(56) Documents cités:
- WO-A1-2009/029157
- KR-B1- 101 238 913

## Description

L'invention est relative à un réseau intelligent pour la communication par radio de données, réseau du genre de ceux qui comportent :
- un réseau de collecte constitué :
   - de capteurs et/ou de compteurs équipés de dispositifs radio communicants en émission et en réception, de préférence à puissance d'émission réglable,
   - de points d'accès équipés de modules de communication radio en émission et en réception, assurant la collecte des données fournies par les dispositifs radio communicants,
   - et d'un système d'information central constitué d'au moins un serveur, d'au moins une base de données et d'au moins un poste d'exploitation, ce système étant programmé pour traiter et stocker l'ensemble des données recueillies et pour piloter tout ou partie du réseau de collecte.

Un tel réseau est par exemple décrit dans le document KR101238913.

L'invention concerne plus particulièrement, mais non exclusivement, un tel réseau dans le cadre de la télérelève des compteurs de fluide, notamment compteurs d'eau et/ou de gaz.

Les réseaux de télécommunication utilisés pour la transmission de données sont de deux types :
- des réseaux adossés à des infrastructures de communication filaire,
- des réseaux adossés à des infrastructures de communication radio.

L'invention concerne essentiellement les réseaux adossés à des infrastructures de communication radio, constituant des systèmes à diffusion, à la différence des systèmes connectés.

L'invention s'applique à toutes les bandes de fréquences utilisées par les réseaux intelligents, et notamment la bande de fréquences ISM (Industriel, Scientifique, Médical) et la bande de fréquences définie par l'annexe 2B de la recommandation européenne ERC 70-03.

Les applications existantes sont basées sur des mécanismes d'allocation d'un canal dédié de communication. Il s'agit de communications point à point, sur le même principe que les communications des réseaux de téléphonie mobile.

Les mécanismes implémentés sur les applications existantes nécessitent une bande passante conséquente, avec de nombreux canaux. Ceci est incompatible avec les bandes étroites et notamment la bande de fréquences définie par l'Annexe 2B de la recommandation européenne ERC 70-03. De plus, ces mécanismes, sur les bandes de fréquence où ils sont implémentés, ne permettent pas de bénéficier de la redondance spatiale.

L'invention a pour but, surtout, de fournir un réseau pour la communication par radio de données qui ne présente plus ou à un degré moindre les inconvénients exposés ci-dessus.

Selon l'invention, un réseau intelligent du genre défini précédemment est caractérisé en ce que le système d'information central est programmé pour déterminer, à l'égard de chaque dispositif radio communicant, le point d'accès qui est le mieux reçu par ce dispositif radio communicant et pour en faire le point d'accès référent de ce dispositif.

Le point d'accès référent est désigné dynamiquement dans le cadre de l'exploitation du réseau intelligent pour transmettre des messages vers un dispositif radio communicant.

Avantageusement, le système d'information central est programmé pour que la détermination du point d'accès référent soit effectuée selon un algorithme de sélection qui repose sur les variables suivantes :
- les données de supervision radio qualifiant la communication sur la voie montante, depuis le dispositif radio communicant vers le point d'accès, et sur la voie descendante, du point d'accès vers le dispositif radio communicant ;
- une période de remontée d'informations, en particulier une période de 24 h.

De préférence, le système d'information central est programmé pour que la détermination du point d'accès référent soit effectuée selon l'algorithme suivant :
- le dispositif radio communicant émet un message à pleine puissance,
- tous les points d'accès en visibilité du dispositif radio communicant mesurent leur niveau de réception de ce message ;
- chaque point d'accès répond au dispositif radio communicant par un message d'acquittement contenant son identité et son niveau de réception,
- le dispositif radio communicant mesure son niveau de réception de chaque point d'accès lors de la réception des messages d'acquittement,
- le dispositif radio communicant notifie le système d'information central de son installation en lui transmettant les différents niveaux de réception associés à l'identité des points d'accès (Nombre de points d'accès, Liste [Niveau de réception du dispositif radio communicant par le point d'accès n°1, Niveau de réception du point d'accès n°1 par le dispositif radio communicant, ..., Niveau de réception du dispositif radio communicant par le point d'accès n°N, Niveau de réception du point d'accès n°N par le dispositif radio communicant])
- le système d'information central analyse les données reçues et choisit le point d'accès réfèrent.

Le système d'information central peut être programmé pour que la sélection du point d'accès référent soit effectuée sur la qualité de la voie descendante du point d'accès vers le dispositif radio communicant, le point d'accès qui assure la meilleure qualité de voie descendante étant retenu comme point d'accès réfèrent.

Le système d'information central peut être programmé pour que, en cas d'égalité entre plusieurs points d'accès pour la qualité de voie descendante, la sélection du point d'accès réfèrent, parmi les points d'accès à qualité égale de voie descendante, soit effectuée sur la qualité de la voie montante.

Le système d'information central, pour suivre de manière journalière la qualité de liaison montante et de la liaison descendante, peut être renseigné sur le nombre de messages attendus de chaque dispositif radio communicant chaque jour, et être programmé pour vérifier le nombre de messages réellement reçus, et effectuer un calcul du taux de réussite pour chaque dispositif radio communicant au niveau de chaque point d'accès, le point d'accès donnant le plus fort taux de réussite étant désigné comme point d'accès référent pour une journée, le calcul permettant de déterminer la qualité de la voie radio.

Le système d'information central peut être programmé pour que chaque semaine, ou à défaut au premier besoin de transfert de message descendant pour les dispositifs radio communicants nouvellement installés, la détermination du point d'accès référent soit effectuée pour chaque dispositif radio communicant selon l'algorithme suivant :
- détermination d'une liste N des points d'accès ayant reçu plus de X%, notamment plus de 80%, des messages de ce dispositif radio communicant, ou à défaut détermination du point d'accès ayant reçu le plus de messages de celui-ci,
- parmi la liste N, détermination du point d'accès I ayant en moyenne reçu les messages avec un niveau RSSI le plus fort au cours de la semaine écoulée,
- désignation du point d'accès I comme point d'accès référent pour le dispositif radio communicant concerné pour la semaine à venir.

Avantageusement, les points d'accès sont programmés pour envoyer un acquittement, avec niveau de réception, selon un étalement aléatoire dans le temps pour éviter des collisions au niveau de la réception par le système central.

La remontée des informations de mesure permet :
- une connaissance du niveau de réception des différents points d'accès vus par un dispositif radio communicant, ces informations étant remontées par les points d'accès au système d'information central,
- mais aussi une connaissance du niveau de réception des dispositifs radio communicants vus par un point d'accès.

L'invention consiste, mises à part les dispositions exposées ci-dessus, en un certain nombre d'autres dispositions dont il sera plus explicitement question ci-après à propos d'un exemple de réalisation décrit avec référence aux dessins annexés, mais qui n'est nullement limitatif. Sur ces dessins :
Fig. 1 est un schéma synoptique simplifié d'un réseau intelligent pour la communication de données, selon l'invention.
Fig. 2 est un schéma simplifié illustrant la sélection d'un point d'accès réfèrent, et
Fig.3 est un schéma simplifié illustrant une sélection quotidienne d'un point d'accès réfèrent.

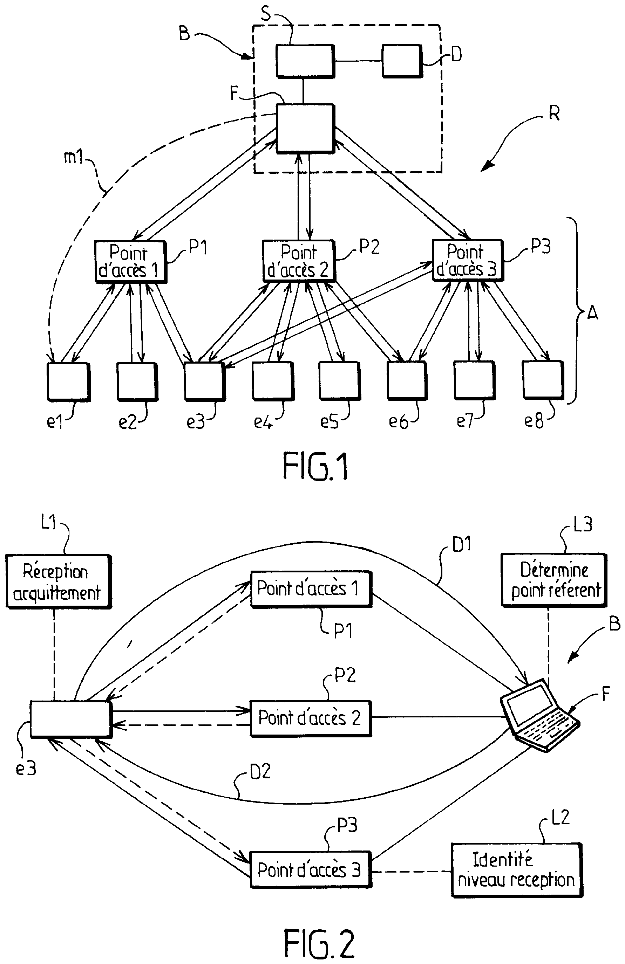

En se reportant à Fig. 1 des dessins, on peut voir un réseau intelligent R de communication de données par radio qui comporte un réseau de collecte A et un système d'information central B.

Le réseau de collecte A comprend des équipements terminaux e1... en, dont le nombre peut être de plusieurs milliers. Sur le dessin, n'ont été représentés que huit équipements terminaux e1-e8.

Ces équipement terminaux sont constitués soit par des compteurs de fluide, en particulier des compteurs d'eau ou de gaz pour des consommateurs particuliers ou des collectivités, soit par des capteurs dans les domaines de l'industrie, par exemple des capteurs de débit, de pression, de température, d'humidité, de niveau, de vitesse, ou des capteurs acoustiques, des capteurs de conductivité, de turbidité, de mesure du pH ou de taux de H₂S. Il peut s'agir également de capteurs dans l'habitat et les activités tertiaires, tels que des capteurs de détection d'intrusion, ou de fumée, ou d'oxyde de carbone CO.

Les équipements terminaux sont équipés d'un module de communication radio en émission et en réception et sont désignés par l'expression "dispositifs radio communicants". Dans le cas de compteurs de fluide, notamment de compteurs d'eau, il s'agit de compteurs équipés de systèmes de télérelève permettant de lire et de transmettre à distance au moins les index de consommation de fluide donnés par le compteur.

La puissance d'émission de chaque dispositif radio communicant est réglable entre une valeur minimale et une valeur maximale. La commande de réglage peut être effectuée par instruction envoyée par radio avec un code propre à chaque dispositif radio communicant.

L'invention s'applique à toutes les bandes de fréquences utilisées par les réseaux intelligents, et notamment les bandes de fréquences ISM (Industriel, Scientifique, Médical) et la bande de fréquences définie par l'Annexe 2B de la Recommandation européenne ERC 70-03. Lorsque la largeur de bande est importante, par exemple de 75 kHz, cette bande est divisée en plusieurs canaux, par exemple six canaux de 12,5 kHz, et on affecte un canal d'émission à chaque dispositif radio communicant.

Le réseau de collecte comprend également des points d'accès P1, P2, P3... généralement en nombre inférieur à celui des équipements terminaux. Ces points d'accès assurent la collecte des données fournies par les dispositifs radio communicants e1.... e8. Les points d'accès P1-P3 sont équipés de modules de communication radio en émission et en réception. Les récepteurs des points d'accès sont en écoute permanente.

Chaque dispositif radio communicant e1,...e8 envoie un message de durée limitée, par exemple de 200 millisecondes, Les dispositifs radio communicants n'envoient un message qu'un nombre limité de fois par jour, par exemple deux fois par jour. à intervalles de 12 h. Chaque message contient au moins l'index de consommation de fluide, et l'identification du compteur.

Un même point d'accès P1-P3 peut voir plusieurs dispositifs radio communicants, c'est-à-dire recevoir les émissions de ces différents dispositifs radio communicants. Notamment, un point d'accès peut voir jusqu'à plusieurs milliers de dispositifs radio communicants de compteurs d'eau, par exemple de l'ordre de 20 000.

Dans l'exemple de Fig. 1, le point d'accès P1 « voit » les dispositifs radio communicants e1, e2, e3, tandis que le point d'accès P2 voit les dispositifs communicants e3, e4, e5, e6, et le point d'accès P3 voit les dispositifs radio communicants e3, e6, e7, e8.

Le système d'information central B est constitué d'au moins un poste d'exploitation F, d'un serveur S, et d'une base de données D. Le système B peut communiquer par radio avec les différents points d'accès P1-P3, par messages codés, et peut envoyer des instructions par radio également par messages codés, à chacun des dispositifs radio communicants e1-e8. Le système d'information central B peut ainsi traiter et stocker l'ensemble des données recueillies par les points d'accès, en provenance des dispositifs radio communicants, et piloter tout ou partie du réseau de collecte par messages envoyés aux points d'accès et/ou aux dispositifs radio communicants.

Il apparaît qu'un même dispositif radio communicant, par exemple e3 selon Fig. 1, voit et est vu par plusieurs points d'accès, P1, P2, P3 selon l'exemple simplifié représenté. Des données sont donc échangées entre le dispositif radio communicant e3 et les trois points d'accès vus par ce dispositif. Cette situation peut se répéter pour d'autres dispositifs radio communicants de sorte qu'il en résulte un encombrement inutile des canaux de transmission, avec risque de collision. Les points d'accès, voyant un dispositif radio communicant, transmettent au système central d'information les mêmes données issues de ce dispositif radio communicant, ce qui n'est pas favorable à la performance de l'ensemble du réseau en raison des risques d'interférence.

L'invention permet de sélectionner un point d'accès réfèrent, pour un dispositif radio communicant. Un tel point d'accès référent est un point d'accès désigné dynamiquement dans le cadre de l'exploitation du réseau intelligent pour transmettre des messages vers le dispositif radio communicant associé.

Le système d'information central B est programmé avec un algorithme de sélection du point d'accès référent qui repose sur les variables suivantes :
- des données de supervision radio qualifiant la communication sur la voie montante, du dispositif radio communicant, e3 dans l'exemple considéré, vers le point d'accès P1, P2 ou P3, et sur la voie descendante du point d'accès vers le dispositif radio communicant e3 ;
- une période de remontée d'informations de 24 h, ou d'une autre durée.

La remontée des informations de mesure permet :
- une connaissance du niveau de réception des différents points d'accès P1, P2, P3 vus par un dispositif radio communicant e3 ; ces informations sont remontées par les points d'accès P1-P3 au système d'information central B ;
- mais aussi une connaissance du niveau de réception des dispositifs radio communicants e3, e4, e5, e6 vus par un point d'accès, tel que P2.

L'algorithme pour déterminer un point d'accès référent est prévu pour traiter plusieurs cas de figure :
- cas 1 : installation d'un nouveau dispositif radio communicant
- cas 2 : réévaluation suite à l'installation d'un nouveau point d'accès
- cas 3 : réévaluation périodique
- cas 4 : suivi quotidien

### Cas 1 : Installation d'un nouveau dispositif radio communicant

Le déroulement des opérations prises en compte ou pilotées par le système d'information central B programmé avec l'algorithme de l'invention est le suivant.
1. Le nouveau dispositif radio communicant, par exemple e3, émet un message.
2. Tous les points d'accès en visibilité du dispositif radio communicant e3, à savoir les points d'accès P1, P2, P3 selon l'exemple simplifié représenté sur Fig. 1, mesurent leurs niveaux de réception de ce message.
3. Chaque point d'accès P1, P2, P3 répond au dispositif communicant e3 par un message d'acquittement contenant l'identité et le niveau de réception du point d'accès.
4. Le dispositif radio communicant e3 mesure son niveau de réception de chaque point d'accès P1, P2, P3 lors de la réception des messages d'acquittement provenant de ces points d'accès.
5. Le dispositif radio communicant e3 notifie le système d'information central B en lui transmettant par l'intermédiaire des points d'accès, les différents niveaux de réception associés à l'identité des points d'accès. Cette transmission d'informations va donc comprendre les données suivantes relatives au dispositif radio communicant e3 :
   - nombre de points d'accès en visibilité du dispositif radio communicant ;
   - liste pour chaque point d'accès :
      ∘ niveau de réception du dispositif radio communicant e3 par le point d'accès n° 1, par exemple P1
      ∘ niveau de réception du point d'accès n° 1 (par exemple P1) par le dispositif radio communicant e3
      ∘
      ∘ niveau de réception du dispositif radio communicant e3, par le point d'accès n° N, par exemple P3
      ∘ niveau de réception du point d'accès n° N, par exemple P3, par le dispositif radio communicant, par exemple e3.
6. Le système d'information central B analyse les données reçues et choisit le point d'accès réfèrent, par exemple P2, qui, en général, est celui qui assure la meilleure voie descendante vers le dispositif radio communicant e3 associé.

Suite à ce choix de point d'accès réfèrent, les autres points d'accès visibles par le dispositif radio communicant considéré ne sont plus pris en compte par le système d'information central B qui communique exclusivement avec le point d'accès référent choisi. Le point d'accès référent pourra être réévalué par la suite, ou en raison d'une perte de ce point d'accès (par exemple du fait d'une panne).

Les points d'accès envoient leur acquittement, avec niveau de réception, selon un étalement aléatoire dans le temps pour éviter des collisions au niveau de la réception par le système central B. La sélection du point d'accès référent est effectuée de préférence sur la qualité de la voie descendante du point d'accès vers le dispositif radio communicant ; le point d'accès assurant la meilleure qualité de voie descendante est retenu comme point d'accès réfèrent.

En cas d'égalité entre plusieurs points d'accès, pour la qualité de voie descendante, la sélection du point d'accès référent parmi les points d'accès à qualité égale de voie descendante, est effectuée sur la qualité de la voie montante, c'est-à-dire depuis le dispositif radio communicant vers le point d'accès.

Ces opérations de sélection du point d'accès référent sont effectuées à puissance d'émission maximale du dispositif radio communicant.

### Cas 2 : Réévaluation suite à l'installation d'un nouveau point d'accès

1. Une période d'attente suffisante est prévue pour disposer des données du nouveau point d'accès, par exemple P3 : l'analyse de ces données par le système d'information central B permet à ce dernier d'identifier les dispositifs radio communicants qui doivent faire l'objet d'une réévaluation.
2. Une commande est envoyée par le système d'information central B vers le dispositif radio communicant, par exemple e3, pour réévaluer son point d'accès réfèrent :
   - si la commande est reçue par le dispositif radio communicant, celui-ci réévalue le niveau de réception, et l'algorithme se poursuit comme exposé à propos du cas 1 précédent ;
   - si la commande n'est pas reçue par le dispositif radio communicant, celui-ci ne retourne pas un message d'acquittement au système d'information central, lequel doit donc essayer de joindre le dispositif radio communicant via un autre point d'accès, pour une réévaluation. Une commande peut être envoyée vers le dispositif radio communicant, par exemple e3, pour le faire passer en puissance d'émission maximale, qui doit permettre d'effectuer la réévaluation.

Le schéma de Fig. 2 illustre les opérations selon les cas 1 et 2 selon l'invention.

Le dispositif radio communicant e3 (étiquette L1), après avoir émis un message, reçoit les acquittements en provenance des points d'accès P1, P2, P3 vus par ce dispositif e3. Le message d'acquittement (étiquette L2) donne l'identité du point d'accès et le niveau de réception du signal provenant du dispositif e3. Le dispositif radio communicant mesure le niveau de réception du signal d'acquittement émis par chaque point d'accès, en lui affectant l'identité du point d'accès. Après réception de l'ensemble des acquittements, le dispositif radio communicant e3 retourne l'ensemble des mesures, avec identification des points d'accès correspondants, au poste d'exploitation F du système B comme schématisé par la flèche D1.

Le poste d'exploitation F (étiquette L3) détermine, à réception du résultat des mesures, le point d'accès référent pour le dispositif radio communicant concerné e3.

Le poste d'exploitation F attribue, pour chaque dispositif radio communicant, un point d'accès réfèrent, par exemple P2, qui sera en charge de transmettre les messages descendants, provenant du système central B, vers le dispositif radio communicant associé.

Le dispositif radio communicant e3 recevra les instructions provenant du poste d'exploitation F par une seule voie descendante, assurant la meilleure transmission, et correspondant au poste référent P2 retenu.

Le poste d'exploitation F peut envoyer comme schématisé par la flèche D2 une relance d'assignation au dispositif radio communicant e3 pour une réévaluation et une mise à jour du point d'accès réfèrent.

### Cas 3 : Réévaluation périodique

1. Si une dégradation du taux de performance des commandes descendantes apparaît, par suite d'un non-acquittement des commandes transmises par le point d'accès réfèrent, ou si une dégradation du niveau de réception du dispositif radio communicant par son point d'accès référent apparaît, le système d'information central est programmé pour amorcer une opération de réévaluation du point d'accès réfèrent.
2. Les opérations, pilotées par l'algorithme, se poursuivent selon le schéma du cas 1 ou du cas 2 précédent.

Un exemple de dégradation des performances est lié à la perte d'efficacité d'une antenne d'un dispositif radio communicant ou d'un point d'accès, par suite d'une oxydation de cette antenne.

Selon l'invention, le point d'accès référent peut changer dans le temps, et est pratiquement auto-reconfigurable.

### Cas 4 : Suivi quotidien

Le système d'information central B peut être prévu pour suivre de manière journalière la qualité de liaison montante (affaiblissement du signal de réception) et de la liaison descendante (indicateurs remontés par le dispositif radio communicant, nombre de messages reçus non corrompus, nombre de messages reçus incorrects,...).

Le système d'information central B est renseigné de manière à connaître le nombre de messages attendus de chaque dispositif radio communicant (redondance temporelle) chaque jour. Le système B est programmé pour vérifier, avec cette information, le nombre de messages réellement reçus, et pour calculer le taux de réussite pour chaque dispositif radio communicant au niveau de chaque point d'accès. Le point d'accès donnant le plus fort taux de réussite est désigné comme point d'accès référent pour une journée.

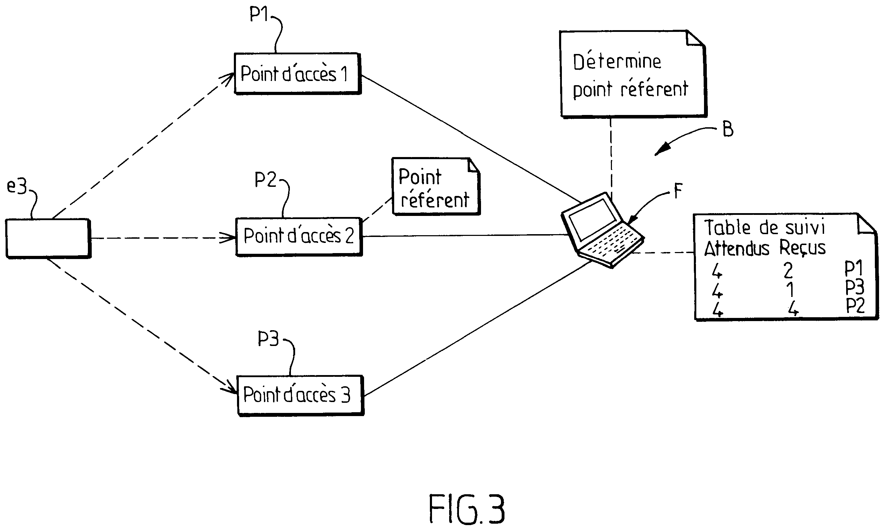

Le schéma de Fig. 3 illustre les opérations pour ce cas 4.

Le dispositif radio communicant e3, émet des messages de données au cours de la journée. Les points d'accès P1, P2, P3 transmettent tous ou certains seulement de ces messages au poste d'exploitation F du système B qui connaît le nombre de messages attendus quotidiennement de chaque dispositif radio communicant, par exemple 4 messages quotidiens. Le poste F tient une table de suivi du nombre de messages attendus et du nombre de messages reçus pour chaque point d'accès P1, P2, P3. Selon l'exemple de Fig.3, quatre messages étaient attendus de chaque point d'accès : deux messages ont été reçus du point d'accès P1, un seul message a été reçu du point d'accès P3, tandis que quatre messages ont été reçus du point d'accès P2. Après analyse, 100% des messages ont été reçus du point d'accès P2 qui est désigné comme point d'accès référent pour une journée.

Le point d'accès référent sera désigné par une analyse quotidienne, avec mise à jour quotidienne des informations.

Afin de lisser la variation naturellement importante des bilans de liaison, l'algorithme peut être prévu pour prendre en compte les niveaux de puissance reçus récents mais également la stabilité de la liaison et l'historique des bilans de liaison. Selon un algorithme possible, chaque semaine, ou à défaut au premier besoin de transfert de message descendant pour les dispositifs radio communicants nouvellement installés, les opérations suivantes sont effectuées pour chaque dispositif radio communicant :
- détermination d'une liste N des points d'accès ayant reçu plus de X%, notamment plus de 80%, des messages de ce dispositif radio communicant, ou à défaut détermination du point d'accès ayant reçu le plus de messages de celui-ci,
- parmi la liste N, détermination du point d'accès I ayant en moyenne reçu les messages avec un niveau RSSI (RSSI = indication du niveau du signal reçu) le plus fort au cours de la semaine écoulée,
- le point d'accès I est désigné comme point d'accès référent pour le dispositif radio communicant concerné, pour la semaine à venir.

Cet algorithme est un point de départ qui pourra être complété en particulier pour la sélection d'un point d'accès référent alternatif en cas d'échec répété de transmission descendante.

L'algorithme de l'invention est adapté à toutes les largeurs de bande et particulièrement aux bandes étroites. Il permet également d'offrir une redondance spatiale à tous les systèmes quelle que soit la bande de fréquence. Enfin, la gestion du réseau se trouve simplifiée étant donné que les points d'accès n'ont pas besoin de connaître les canaux descendants des points d'accès limitrophes.

Une application particulièrement intéressante de l'invention concerne les réseaux intelligents de communication de données pour la télérelève de compteurs d'eau ou de compteurs de gaz.

La solution de l'invention peut être appliquée à :
- un réseau de télérelève de compteurs d'électricité,
- un réseau de surveillance de capteurs dans les domaines de l'industrie, notamment capteurs de débit, de pression, de température, d'humidité, de niveau, de vitesse, ou capteurs acoustiques, capteurs de conductivité, de turbidité, de mesure du pH, de taux de H₂S,
- un réseau de surveillance de capteurs dans l'habitat et les activités tertiaires, notamment des capteurs de détection d'intrusion, de fumée, d'oxyde de carbone CO.

## Revendications

1. Réseau intelligent de communication de données par radio comportant
- un réseau de collecte (A) constitué
- de capteurs et/ou compteurs équipés de dispositifs radio communicants (e1,...e8), en émission et en réception, de préférence à puissance d'émission réglable,
- des points d'accès (P1, P2, P3), équipés de modules de communication radio en émission et en réception, assurant la collecte des données fournies par les dispositifs radio communicants,
- et un système d'information central (B) constitué d'au moins un serveur, d'au moins une base de données, et d'au moins un poste d'exploitation, ce système étant programmé pour traiter et stocker l'ensemble des données recueillies et pour piloter tout ou partie du réseau de collecte,
**caractérisé en ce que** le système d'information central (B) est programmé pour déterminer pour chaque dispositif radio communicant, un point d'accès référent parmi les points d'accès visibles par le dispositif radio communicant, ce point d'accès étant celui qui est le mieux reçu par le dispositif radio communicant.

2. Réseau selon la revendication 1, **caractérisé en ce que** le système d'information central (B) est programmé pour que la détermination du point d'accès référent soit effectuée selon un algorithme de sélection qui repose sur les variables suivantes :
- les données de supervision radio qualifiant la communication sur la voie montante, depuis le dispositif radio communicant vers le point d'accès, et sur la voie descendante, du point d'accès vers le dispositif radio communicant ;
- une période de remontée d'informations, en particulier une période de 24 h.

3. Réseau selon la revendication 2, **caractérisé en ce que** le système d'information central (B) est programmé pour que la détermination du point d'accès référent soit effectuée selon l'algorithme suivant :
- le dispositif radio communicant (e3) émet un message à pleine puissance,
- tous les points d'accès (P1, P2, P3) en visibilité du dispositif radio communicant mesurent leur niveau de réception de ce message ;
- chaque point d'accès répond au dispositif radio communicant par un message d'acquittement contenant son identité et son niveau de réception,
- le dispositif radio communicant (e3) mesure son niveau de réception de chaque point d'accès lors de la réception des messages d'acquittement,
- le dispositif radio communicant (e3) notifie le système d'information central (B) de son installation en lui transmettant les différents niveaux de réception associés à l'identité des points d'accès (Nombre de points d'accès, Liste [Niveau de réception du dispositif radio communicant par le point d'accès n°1, Niveau de réception du point d'accès n°1 par le dispositif radio communicant, ..., Niveau de réception du dispositif radio communicant par le point d'accès n°N, Niveau de réception du point d'accès n°N par le dispositif radio communicant])
- le système d'information central (B) analyse les données reçues et choisit le point d'accès réfèrent (P2).

4. Réseau selon la revendication 3, **caractérisé en ce que** le système d'information central (B) est programmé pour que la sélection du point d'accès réfèrent soit effectuée sur la qualité de la voie descendante du point d'accès (P1, P2, P3) vers le dispositif radio communicant (e3), le point d'accès (P2) qui assure la meilleure qualité de voie descendante étant retenu comme point d'accès réfèrent.

5. Réseau selon la revendication 4, **caractérisé en ce que** le système d'information central (B) est programmé pour que, en cas d'égalité entre plusieurs points d'accès pour la qualité de voie descendante, la sélection du point d'accès réfèrent, parmi les points d'accès à qualité égale de voie descendante, soit effectuée sur la qualité de la voie montante.

6. Réseau selon la revendication 1 ou 2, **caractérisé en ce que** le système d'information central (B), pour suivre de manière journalière la qualité de liaison montante et de la liaison descendante, est renseigné sur le nombre de messages attendus de chaque dispositif radio communicant chaque jour, et est programmé pour vérifier le nombre de messages réellement reçus, et effectuer un calcul du taux de réussite pour chaque dispositif radio communicant au niveau de chaque point d'accès, le point d'accès donnant le plus fort taux de réussite étant désigné comme point d'accès référent pour une journée, le calcul permettant de déterminer la qualité de la voie radio.

7. Réseau selon la revendication 1 ou 2, **caractérisé en ce que** le système d'information central (B) est programmé pour que chaque semaine, ou à défaut au premier besoin de transfert de message descendant pour les dispositifs radio communicants nouvellement installés, la détermination du point d'accès référent soit effectuée pour chaque dispositif radio communicant selon l'algorithme suivant :
- détermination d'une liste N des points d'accès ayant reçu plus de X%, notamment plus de 80%, des messages de ce dispositif radio communicant, ou à défaut détermination du point d'accès ayant reçu le plus de messages de celui-ci,
- parmi la liste N, détermination du point d'accès I ayant en moyenne reçu les messages avec un niveau RSSI le plus fort au cours de la semaine écoulée
- désignation du point d'accès I comme point d'accès référent pour le dispositif radio communicant concerné pour la semaine à venir

8. Réseau selon l'une quelconque des revendications précédentes, **caractérisé en ce que** les points d'accès (P1, P2, P3) sont programmés pour envoyer un acquittement, avec niveau de réception, selon un étalement aléatoire dans le temps pour éviter des collisions au niveau de la réception par le système central (B).

## Patentansprüche

1. Intelligentes Netz zur Übertragung von Daten per Funk, mit:
- einem Sammelnetz (A), bestehend aus
- Sensoren und/oder Zählern, die mit Sende- und Empfangs-Funkübertragungsvorrichtungen (e1,...,e8), vorzugsweise mit regelbarer Sendeleistung, versehen sind,
- Zugangspunkten (P1, P2, P3), die mit Sende- und Empfangs-Funk-übertragungsmodulen versehen sind, welche das Sammeln von durch die Funkübertragungsvorrichtungen gelieferten Daten gewährleisten,
- und einem zentralen Informationssystem (B), das aus mindestens einem Server, mindestens einer Datenbank und mindestens einer Auswertestation gebildet ist, wobei das System dazu programmiert ist, die Gesamtheit der empfangenen Daten zu verarbeiten und zu speichern und das gesamte oder einen Teil des Sammelnetzes zu steuern,
**dadurch gekennzeichnet, dass** das zentrale Informationssystem (B) dazu programmiert ist, für jede Funkübertragungsvorrichtung einen Referenz-Zugangspunkt unter den durch die Funkübertragungsvorrichtung sichtbaren Zugangspunkten zu bestimmen, wobei dieser Zugangspunkt derjenige ist, der von der Funkübertragungsvorrichtung am besten empfangen wird.

2. Netz nach Anspruch 1, **dadurch gekennzeichnet, dass** das zentrale Informationssystem (B) derart programmiert ist, dass das Bestimmen eines Referenz-Zugangspunkts nach einem Auswahlalgorithmus durchgeführt wird, der auf den folgenden Variablen beruht:
- den Funküberwachungsdaten, welche die Kommunikation im Uplink von der Funkübertragungsvorrichtung zum Zugangspunkt und im Downlink von dem Zugangspunkt zur Funkübertragungsvorrichtung kennzeichnen;
- einem Zeitraum des Hochladens von Informationen, insbesondere einem Zeitraum von 24h.

3. Netz nach Anspruch 2, **dadurch gekennzeichnet, dass** das zentrale Informationssystem (B) derart programmiert ist, dass das Bestimmen eines Referenz-Zugangspunkts nach dem folgenden Auswahlalgorithmus durchgeführt wird:
- die Funkübertragungsvorrichtung (e3) gibt eine Nachricht mit voller Leistung aus,
- sämtliche Zugangspunkte (P1, P2, P3) im Sichtbereich der Funkübertragungsvorrichtung messen ihre Empfangsstärke für dieses Signal;
- jeder Zugangspunkt antwortet auf die Funkübertragungsvorrichtung mit einer Bestätigungsnachricht, welche dessen Identität und Empfangsstärke enthält,
- die Funkübertragungsvorrichtung (e3) misst ihre Empfangsstärke in Bezug auf jeden Zugangspunkt beim Empfang der Bestätigungsnachrichten,
- die Funkübertragungsvorrichtung (e3) informiert das zentrale Informationssystem (B) über seine Installation, indem es diesem die der Identität der Zugangspunkte zugeordneten verschiedenen Empfangsstärken übermittelt (Anzahl der Zugangspunkte, Liste [Empfangsstärke der Funkübertragungsvorrichtung durch den Zugangspunkt Nr. 1, Empfangsstärke des Zugangspunkts Nr. 1 durch die Funkübertragungsvorrichtung, ..., Empfangsstärke der Funkübertragungsvorrichtung durch den Zugangspunkt Nr. N, Empfangsstärke des Zugangspunkts Nr. N durch die Funkübertragungsvorrichtung]),
- das zentrale Informationssystem (B) analysiert die empfangenen Daten und wählt den Referenz-Zugangspunkt (P2).

4. Netz nach Anspruch 3, **dadurch gekennzeichnet, dass** das zentrale Informationssystem (B) derart programmiert ist, dass die Auswahl des Referenz-Zugangspunkts anhand der Qualität des Downlinks von den Zugangspunkten (P1, P2, P3) zu der Funkübertragungsvorrichtung (e3) durchgeführt wird, wobei der Zugangspunkt (P2), welcher die beste Downlink-Qualität gewährleistet, als der Referenz-Zugangspunkt gewählt wird.

5. Netz nach Anspruch 4, **dadurch gekennzeichnet, dass** das zentrale Informationssystem (B) derart programmiert ist, dass im Falle der Gleichheit mehrerer Zugangspunkte hinsichtlich der Downlink-Qualität, die Auswahl des Referenz-Zugangspunkts unter den Zugangspunkten von gleicher Downlink-Qualität anhand der Qualität des Uplinks durchgeführt wird.

6. Netz nach Anspruch 1 oder 2, **dadurch gekennzeichnet, dass** das zentrale Informationssystem (B), um die Qualität der Uplink-Verbindung und der Downlink-Verbindung täglich zu verfolgen, über die Anzahl der erwarteten Nachrichten jeder Funkübertragungsvorrichtung unterrichtet wird, und derart programmiert ist, dass sie die Anzahl der tatsächlich empfangenen Nachrichten prüft und eine Berechnung der Erfolgsquote für jede Funkübertragungsvorrichtung in Bezug auf jeden Zugangspunkt durchführt, wobei der Zugangspunkt, der die höchste Erfolgsquote aufweist, als Referenz-Zugangspunkt für einen Tag bestimmt wird, wobei die Berechnung das Bestimmen der Qualität der Funkstrecke ermöglicht.

7. Netz nach Anspruch 1 oder 2, **dadurch gekennzeichnet, dass** das zentrale Informationssystem (B) derart programmiert ist, dass die Bestimmung des Referenz-Zugangspunkts jede Woche, gegebenenfalls bei der ersten Notwendigkeit einer Nachrichtenübertragung im Downlink für die neu installierten Funkübertragungsvorrichtungen, für jede Funkübertragungsvorrichtung nach dem folgenden Algorithmus durchgeführt wird:
- Bestimmen einer Liste N der Zugangspunkte, die mehr als X%, insbesondere mehr als 80%, der Nachrichten dieser Funkübertragungsvorrichtung empfangen haben, oder gegebenenfalls Bestimmen des Zugangspunkts, der die meisten Nachrichten von dieser empfangen hat,
- aus der Liste N, Bestimmen des Zugangspunkts I, der in der vergangenen Woche die Nachrichten im Mittel mit der größten RSSI-Stärke empfangen hat,
- Festlegen des Zugangspunkts I als Referenz-Zugangspunkt für die betreffende Funkübertragungsvorrichtung für die kommende Woche.

8. Netz nach einem der vorhergehenden Ansprüche, **dadurch gekennzeichnet, dass** die Zugangspunkte (P1, P2, P3) derart programmiert sind, dass sie eine Bestätigung, einschließlich der Empfangsstärke, entsprechend einer zufälligen zeitlichen Verteilung senden, um Kollisionen in Bezug auf den Empfang durch das zentrale System (B) zu vermeiden.

## Claims

1. An intelligent network for communicating data by radio, comprising:
- a collecting network (A) consisting of:
- sensors and/or meters equipped with communicating radio devices (e1, ..., e8) for transmitting and receiving, preferably having adjustable transmission power,
- access points (P1, P2, P3) equipped with radio communication modules for transmitting and receiving, which collect data provided by the communicating radio devices, and
- a central information system (B) consisting of at least one server, at least one database and at least one operating station, said system being programmed to process and store all the gathered data and to control all or part of the collecting network,
**characterized in that** the central information system (B) is programmed to determine a reference access point for each communicating radio device, this access point being the access point which is best received by the communicating radio device.

2. The network as claimed in claim 1, **characterized in that** the central information system (B) is programmed so that the determination of the reference access point is carried out according to a selection algorithm based on the following variables:
- the radio monitoring data qualifying the communication on the uplink, from the communicating radio device to the access point, and on the downlink, from the access point to the communicating radio device;
- an information feedback period, in particular a 24-hour period.

3. The network as claimed in claim 2, **characterized in that** the central information system (B) is programmed so that the determination of the reference access point is carried out according to the following algorithm:
- the communicating radio device (e3) transmits a message at full power,
- all the access points (P1, P2, P3) within visibility of the communicating radio device measure their receiving level of this message,
- each access point replies to the communicating radio device with an acknowledgement message containing its identity and receiving level,
- the communicating radio device (e3) measures its receiving level of each access point during the reception of the acknowledgement messages,
- the communicating radio device (e3) notifies the central information system (B) of its installation by transmitting to it the different receiving levels associated with the identity of the access points (Number of access points, List [Receiving level of the communicating radio device by the access point no. 1, Receiving level of the access point no. 1 by the communicating radio device, ... , Receiving level of the communicating radio device by the access point no. N, Receiving level of the access point no. N by the communicating radio device]),
- the central information system (B) analyses the received data and chooses the reference access point (P2).

4. The network as claimed in claim 3, **characterized in that** the central information system (B) is programmed so that the selection of the reference access point is carried out on the basis of the quality of the downlink from the access point (P1, P2, P3) to the communicating radio device (e3), the access point (P2) which provides the best downlink quality being chosen as the reference access point.

5. The network as claimed in claim 4, **characterized in that** the central information system (B) is programmed so that, in the event of equality among a plurality of access points for the downlink quality, the selection of the reference access point from the access points having equal downlink quality is carried out on the basis of the quality of the uplink.

6. The network as claimed in claim 1 or 2, **characterized in that**, in order to monitor the quality of the uplink and the downlink on a daily basis, the central information system (B) is informed of the number of messages expected from each communicating radio device each day, and is programmed to check the number of messages actually received and perform a calculation of the success rate for each communicating radio device in each access point, the access point giving the highest success rate being designated as the reference access point for a day, the calculation allowing the quality of the radio channel to be determined.

7. The network as claimed in claim 1 or 2, **characterized in that** the central information system (B) is programmed so that each week or, failing that, in the event of the first downlink message transfer requirement for the newly installed communicating radio devices, the determination of the reference access point is carried out for each communicating radio device according to the following algorithm:
- determination of a list N of access points having received more than X%, notably more than 80%, of the messages from this communicating radio device or, failing this, determination of the access point having received the most messages from the latter;
- from the list N, determination of the access point I having on average received the messages with the highest RSSI level during the preceding week,
- designation of the access point I as the reference access point for the communicating radio device concerned for the following week.

8. The network as claimed in any one of the preceding claims, **characterized in that** the access points (P1, P2, P3) are programmed to send an acknowledgement, with receiving level, with a random temporal staggering in order to avoid collisions in the reception by the central system (B).
